# EUROPEAN PATENT SPECIFICATION

(11) **EP 1 151 203 B1**
(45) Date of publication and mention of the grant of the patent: **16.11.2005**
(21) Application number: 99964917.1
(22) Date of filing: 21.12.1999
(51) Int. Cl.: F16B 5/02, B62D 55/24, F16G 3/08

(54) **METHOD TO INTERCONNECT A BELT/BELTS**
VERFAHREN ZUM VERBINDEN VON RIEMEN
PROCEDE DE CONNEXION DE CHENILLE

(30) Priority: 22.12.1998 SE 9804487
(43) Date of publication of application: 07.11.2001
(73) Proprietor: Krainer, Norbert, 771 41 Ludvika (SE)
(72) Inventor: Krainer, Norbert, 771 41 Ludvika (SE)
(74) Representative: Bäckström, Leif C.
(86) International application number: PCT/SE1999/002444
(87) International publication number: WO 2000/037807

(56) References cited:
- EP-A1- 0 163 777
- US-A- 1 382 888
- US-A- 4 645 274
- US-A- 4 953 920

## Description

The present invention relates to a closed loop in an intended moving direction by means of a joint device arranged band. Said band includes one or several flexible nets or the like, band-reinforcing and band-strengthening means, which preferably are also baked into a flexible material, for example rubber. The ends of said band are located mutually overlapping to a certain extent and are provided with holes in said overlapping region.

Bands of this kind are used in piste machines to drive such machines on steep slopes in order to prepare snow and/or ice to a suitable surface for example for downhill skiing. The bands or tracks of a piste machine are exposed to extreme loads because the piste machine in itself is heavy, because the work to be performed by the machine requires great forces - for instance when dealing with heavy snow or ice - and because virtually all working of snow and ice takes place on steep slopes and on mountain sides.

A piste machine may by way of example be fitted with four, five, six, etc. parallel running bands formed into closed loops, each such band having a width of, for example, 225 mm, the said bands together forming a so-called piste machine mat, which in turn carries a relatively large number of steps or links located across the direction of travel of the mat in the form of transverse metal rails which engage with the underlying surface and thus drive the piste machine. My own Swedish patent No. 8900098-8, publication No. 466 758, shows among other things example of known used bearer bands and steps or links for piste machines.

It goes without saying that with such extreme loads problems occur in that the bands break and/or become worn and need in such instances to be replaced, joined together and/or repaired.

As disclosed by U.S. Patent No. 4 953 920, for example, one known and utilised method for making a closed band loop out of a straight band for a special piste machine involves carefully and exactly in relation to the wanted band length in a special machine locating and securing by pressing end pieces provided with eyelets along both end edges of the band, which end pieces are then located with the eyelets mutually arranged in line so that a pin or rod inserted through the eyelets from the side pivotally fixes the eyelets and thus the ends of the band relative to each other. These end pieces each comprise a rigid metal portion pressed into the respective band end, the said end pieces thus reforming the previously flexible band ends in their end portions into rigid parts, each one occupying a portion of the band in its direction of rotation of about 1 dm, so that the band altogether becomes stiffened more than about 2 dm by the said end joint and within this area it will moreover be virtually impossible to flexibly attach the transverse steps/links or metal rails which are used in large numbers to transmit the engine power to the underlying surface.

The existence of these stiffened end portions of the band often results in fatigue and breakage of this before respectively after the same, viewed in the direction of motion of the band, since there the rigid end pieces encounter the flexible band. This fatigue is generated primarily at the idlers for the closed band, in other words where the band changes direction of rotation under a relatively narrow radius. Here there thus always takes place a certain bending and breaking action for each revolution completed by the band between the rigid end piece and the band, the magnitude of this bending and breaking action being roughly proportional to the length of the end piece in the direction of movement of the band and towards the load in the band, which means that the greater the length of the end piece and the higher the load in the band the greater the breaking action that is generated on the band.

Also previously known is a machine called Snow Trac produced in Morgongåva and Klövsjö in Sweden about the year 1950. Each band ends or track ends thereof are arranged overlapping to such an extent that two steps, U-shaped from thin steel plates, hold the ends of three bands. Said thin steel plates are used to join together the ends of each band as well as to join together all three bands to a mat. Said known machine requires relatively long band overlapping regions, which will stiffen the mat of three bands in the direction of rotation of the bands when bending occur along idler rollers, for example. An alignment of all ends of all three bands are required in order to join them to said two steps. Furthermore, the Snow Trac was essentially used only for the purpose of transport of people. Thus, the bands thereof as well as the steps thereof were adapted and designed only for comparatively low loads on the mat of bands, for example the steps thereof were made of folded thin steel plates, which will yield when heavily loaded, either at bolts and nuts when tightened and/or at the U-flanges thereof when running.

The object of the present invention is to endeavour to reduce to the greatest possible extent respectively to eliminate the above outlined disadvantages of prior art technique.

In particular the present invention aims at indicating a device by means of which changing of belts can be carried out relatively quickly without it being necessary to employ costly special machines and without imposing demands on exact positioning of the end pieces in relation to the band.

Furthermore, according to the invention it is endeavoured to accomplish greater mobility and gentler running in the band joint, to indicate a price-beneficial device for joining together of bands and also to indicate a joining device which exerts a minimal load and minimal stress on the band in itself during use.

These objects and benefits respectively have been accomplished respectively obtained in the invention according to claim 1.

Further objects and benefits of the invention will become evident from the description hereinbelow and from the appended claims.

A simple and reliable assemblage is obtained if said holes in said overlapping band ends are edge-strengthened and if protrusions, projections, countersinks or embossments and/or equivalent aids are provided in one or both of said plates on the surface or surfaces thereof facing towards each other.

Further advantages of the present invention will become evident from the description hereinbelow, and with particular reference to the accompanying drawing, wherein
Fig. 1 shows a perspective view of mutually joined together bands or band portions according to the invention,
Fig. 2 shows a perspective view of the parts used when joining the band ends according to the invention and used by way of example according to Fig. 1,
Fig. 3 shows, enlarged in relation to Fig. 1 and Fig. 2, a partial cross-section through a band,
Fig. 4 shows a hole reinforcement formed of two parts and utilised in each hole in the version according to Fig. 1 and Fig. 2, and
Fig. 5 shows the hole reinforcement according to Fig. 4 but assembled, i.e. the appearance it has when it is mounted in the respective hole of the band.

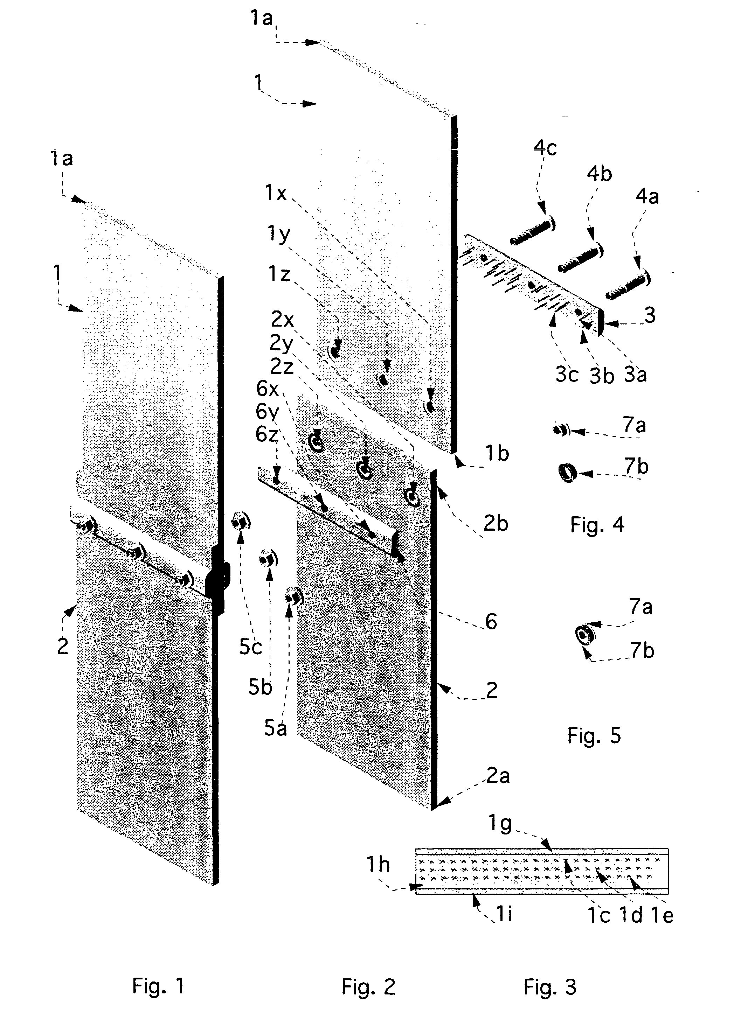

It should be noted here that in Fig. 1 and Fig. 2 the band 1, 2 or band portions 1, 2 are shown oriented vertically despite the fact that these in essential parts normally on piste machines always run parallel to the ground with the exception of the area around the idler rollers of the piste machine.

As indicated in Fig. 3 a band used in a piste machine includes several layers 1c, 1d, 1e, etc., for example 3-6 layers, of reinforcing and strengthening materials, which are usually made as woven nets and which are embedded in or baked into for example a flexible material 1g, 1h, 1i, usually rubber. The reinforcing materials may but do not necessarily have to consist of woven fibres 1c, 1d, 1e, etc. in the form of nets and these are utilised to impart to the band its flexibility and above all its strength, whereas on the other hand the rubber 1g, 1h, 1i essentially gives a somewhat flexible mutual fixing between them and a suitable surface structure to the band. In the example described here the band has a thickness of approximately 10.5 mm, a width of approximately 225 mm and may have a length of, for example, about 8500-9000 mm, but obviously it is within the scope of the invention to make use thereof on bands regardless of their individual dimensions.

A piste machine mat with five such bands will have a total width of approximately 1700 mm, two such mats are used for each piste machine and one mat together with the lateral steps or metal rails weigh approximately 840 kg, so that the mats alone of the piste machine together weigh about 1700 kg.

In order to join together two band portions 1 and 2 in order to form a closed loop, not more closely indicated in Fig. 1, or to join together two bands 1 and 2 the bands or band portions 1 and 2 are first provided with holes, in the present case three holes 1x, 1y, 1z respectively 2x, 2y, 2z, which holes are accomplished to advantage in the bands 1 and 2 by using for example prefabricated holes 6x, 6y, 6z in a tightening plate 6 as a template when drilling the holes. A suitable mutual centre-to-centre distance between the holes may be 80 mm and these are placed to advantage along a straight line. The said holes 1x, 1y, 1z and 2x, 2y, 2z in the band portions 1 and 2 may be provided to advantage with flanged hole-strengthening means which each by way of example - see Fig. 4 - may consist of two parts 7a, 7b, which are pressed together in the respective holes 1x, 1y, 1z and 2x, 2y, 2z from either side of the band 1 respectively 2 to form the assembled hole-strengthening means 7, a perspective view of which is shown in Fig. 5. These two parts 7a and 7b are pressed together to advantage with such a high pressure that the band 1 respectively 2 is slightly locally compressed in the respective hole area, in magnitude about 1.5 mm.

In some cases one band portion, for example 1b, may on delivery from the factory already be provided with holes and assembled edge reinforcements 7 in the holes and in such cases only the holes 2x, 2y, 2z with associated edge reinforcements 7 in the band portion 2b need to be accomplished on site when installing on a special piste machine with a possibility for individually adapted distances between the idler rollers or wheels of the machine for the mat in question.

Two tightening plates 3 and 6 with predrilled holes 3x, 3y, 3z - not marked in Fig. 2 - and 6x, 6y, 6z - indicated in Fig. 1 - are located on either side of the overlapping bands or band portions 1 and 2. In this chosen example one tightening plate 3 is fitted in advance with spikes or nails 3a, 3b, 3c in relatively large numbers, in the present case 28, but obviously the number of such spikes or nails may be varied within broad limits depending on, among other things, the force which is expected to exert a load on the band joint in question. Each of the spikes or nails 3a, 3b, 3c etc. has a diameter of for example approximately 2 mm and a length which protrudes from the tightening plate 3 so much that upon tightening of the plates 3 and 6 by means of bolts 4a-4c and nuts 5a-5c and thus tensioning against each other they will penetrate into and interact both with the net reinforcement in the band 1 and with the net reinforcement in the band 2 and be retained in these positions by the plates 3 and 6 and by the bands 1 and 2 - in the present case - the said length may for example be approximately 25 mm.

Instead of such spikes or nails 3a, 3b, 3c etc. or as a complement either or both tightening plates 3 and 6 may be provided with a large number of protrusions or possibly with countersinks on the surfaces which are facing towards each other in Fig. 1 and Fig. 2, whereby these protrusions etc. upon tightening of the plates 3 and 6 against each other will distort the net reinforcements of the said bands 1 and 2 to such an extent that they will more or less mechanically intermesh with each other. It should also be noted in this context that the edge reinforcements 7 in the holes 1x-1z respectively 2x-2z are slightly countersunk in relation to the surfaces of the band 1 and 2 as indicated more closely heretofore.

Tensioning of the tightening plates 3 and 6 against the bands 1 and 2 is accomplished in the example described here by tightening of the three nuts 5a-5c after insertion of the bolts 4a-4c through the holes in tightening plate 3, through holes 1x-1z in the band 1, through holes 2x-2z and through holes 6x-6z in the tightening plate 6. It is naturally possible to achieve this tensioning by using other means adapted for this purpose, which for example tighten plates 3 and 6 towards each other in some other way than by means of through bolts 4a-4c and associated nuts 5a-5c.

Instead of the nails or spikes 3a, 3b, 3c, etc., a punched plate with flaps which are folded out at right angels to the plate, for example, can be positioned between band 1 and 2 before tightening of the bolts 4a-4c and associated nuts 5a-5c. These flaps penetrate into bands 1 and 2 respectively and thus interact mechanically with their associated reinforcing material 1c, 1d, 1e, etc.

Variations of the embodiments are obviously possible within the scope of the appended Claims.

## Claims

1. A band arranged to a closed loop in an intended moving direction and a joint device, said band including one or several flexible nets or the like, band-reinforcing and band -strengthening means (1c, 1d, 1e, etc.), which preferably are also baked into a flexible material (1g, 1h, 1i, etc.), for example rubber, wherein the ends of said band are located mutually overlapping to a certain extent and are provided with holes in said overlapping region,
**characterized in that** said joint device includes
two plates (3, 6) located mutually aligned on the two surfaces of the band which are turned away from each other in the overlapping region of said band ends,
each plate (3, 6) having a length essentially corresponding to the band width in a direction mainly perpendicular to said intended moving direction, a beam in said intended moving direction shorter than said certain extent of band overlapping and a thickness distributing forces acting against it over a surface of the band in the overlapping region defined essentially as the length of said plate (3, 6) multiplied by the beam thereof, wherein
said tightening means (4, 5) are running from one of said plates (3, 6) to the other (6, 3) through said holes in the overlapping band ends, which holes are located along one straight line and are running in a direction mainly perpendicular to said intended moving direction, and said means (4, 5) are tightened together such that the overlapping band ends are compressed in said surfaces of the band in the band overlapping region defined essentially as the length multiplied by the beam of each of said plates (3, 6).

2. The band according to claim 1,
**characterized in that** said holes in said overlapping band ends are edge-strengthened (7a, 7b).

3. The band according to claim 1 or 2,
**characterized in that** said holes in said overlapping band ends are each provided with edge-strengthening means consisting of two parts (7a, 7b), which are pressed together such that the band is locally compressed close in upon the hole.

4. The band according to any of claims 1 to 3,
**characterized in that** protrusions, projections, countersinks or embossments and/or equivalent aids are provided in one or both of said plates (3 and/or 6) on the surface or surfaces thereof facing towards each other.

5. The band according to any of claims 1 to 4,
**characterized in that** the number of holes in each band end are three.

## Patentansprüche

1. Band (Riemen), das zu einer geschlossenen Schleife in einer beabsichtigten Bewegungsrichtung angeordnet wird, und eine Verbindungsvorrichtung, wobei das Band ein flexibles Netz oder mehrere flexible Netze oder dergleichen einschließt, Bandverstärkungs- und Bandversteifungsmittel (1c, 1d, 1e, usw.), welche vorzugsweise außerdem in ein flexibles Material (1g, 1h, 1i, usw.), beispielsweise Gummi, eingeschliesst sind, wobei die Enden des Bandes in einem bestimmten Ausmaß wechselseitig überlappend angeordnet sind und mit Löchern in dem überlappenden Bereich ausgestattet sind,
**dadurch gekennzeichnet, dass** die Verbindungsvorrichtung zwei Platten (3, 6) einschließt, die wechselseitig ausgerichtet auf den beiden Oberflächen des Bandes angeordnet sind, welche in dem überlappenden Bereich der Enden des Bandes voneinander abgewendet sind, wobei jede Platte (3, 6) eine Länge aufweist, die im Wesentlichen der Bandbreite in eine Richtung entspricht, die hauptsächlich senkrecht zu der beabsichtigten Bewegungsrichtung verläuft, eine Weite in die beabsichtigte Bewegungsrichtung, welche kürzer als das bestimmte Ausmaß des überlappenden Bandes ist, und eine Dicke, welche Kräfte verteilt, die darauf über eine Oberfläche des Bandes in dem überlappenden Bereich einwirken, die im Wesentlichen als die Länge der Platte (3, 6) multipliziert mit deren Weite definiert wird, wobei die Spannmittel (4, 5) von einer der Platten (3, 6) zu der anderen (6, 3) durch die Löcher in den überlappenden Enden des Bandes verlaufen, wobei die Löcher auf einer geraden Linie angeordnet sind und in eine Richtung verlaufen, die hauptsächlich senkrecht zu der beabsichtigten Bewegungsrichtung verläuft, und die Mittel (4, 5) dergestalt miteinander verspannt werden, dass die überlappenden Enden des Bandes an den Oberflächen des Bandes in dem überlappenden Bandbereich zusammengedrückt werden, der im Wesentlichen als die Länge multipliziert mit der Weite von jeder der Platten (3, 6) definiert wird.

2. Band nach Anspruch 1,
**dadurch gekennzeichnet, dass** die Löcher in den überlappenden Enden des Bandes an den Rändern (7a, 7b) ausgesteift sind.

3. Band nach Anspruch 1 oder 2,
**dadurch gekennzeichnet, dass** für die Löcher in den überlappenden Enden des Bandes jeweils Mittel zum Versteifen des Randes zur Verfügung gestellt werden, die aus zwei Teilen (7a, 7b) bestehen, welche dergestalt zusammengepresst werden, dass das Band dicht in und örtlich auf dem Loch zusammengedrückt wird.

4. Band nach irgendeinem der Ansprüche 1 bis 3,
**dadurch gekennzeichnet, dass** Vorwölbungen, Vorsprünge, Senkungen oder Erhöhungen und/oder gleichwertige Hilfsmittel in einer Platte oder in den beiden Platten (3 und/oder 6) auf deren Oberfläche oder deren Oberflächen, die einander gegenüberliegen, zur Verfügung gestellt werden.

5. Band nach irgendeinem der Ansprüche 1 bis 4,
**dadurch gekennzeichnet, dass** die Anzahl der Löcher in jedem Ende des Bandes drei beträgt.

## Revendications

1. Bande agencée en une boucle fermée dans une direction de mouvement prévue et un dispositif de joints, ladite bande comprenant un ou plusieurs filets flexibles ou similaire, des moyens de renfort de bande et de consolidation de bande (1c, 1d, 1e, etc.), qui sont également de préférence cuit en un matériau flexible (1g, 1h, 1i, etc.), par exemple du caoutchouc, dans laquelle les extrémités de ladite bande sont situées de manière mutuellement chevauchante sur une certaine longueur et sont pourvues de trous dans ladite région de chevauchement,
**caractérisée en ce que** ledit dispositif de joints comprend deux plaques (3, 6) situées de manière mutuellement alignée sur les deux surfaces de la bande qui sont tournées à l'opposé l'une de l'autre dans la région de chevauchement desdites extrémités de bande, chaque plaque (3, 6) présentant une longueur essentiellement correspondante à la largeur de bande dans une direction essentiellement perpendiculaire à ladite direction de mouvement prévue, une poutre dans ladite direction de mouvement prévue plus petite que ladite certaine longueur de bande chevauchante et une épaisseur distribuant les consolidations agissant contre elle sur une surface de la bande dans la région de chevauchement définie essentiellement comme la longueur de ladite plaque (3, 6) multipliée par la poutre de celle-ci, dans laquelle lesdits moyens de serrage (4, 5) s'étendent d'une desdites plaques (3, 6) à l'autre (6, 3) au travers desdits trous dans les extrémités de bande se chevauchant, lesquels trous sont situés le long d'une ligne droite et s'étendent dans une direction essentiellement perpendiculaire à ladite direction de mouvement prévue, et lesdits moyens (4, 5) sont resserrés ensemble de sorte que les extrémités de bande chevauchantes soient comprimées dans lesdites surfaces de la bande dans la région chevauchante de la bande définie essentiellement comme la longueur multipliée par la poutre de chacune desdites plaques (3, 6).

2. Bande selon la revendication 1,
**caractérisée en ce que** lesdits trous dans lesdites extrémités de bande chevauchantes sont renforcés sur les bords (7a, 7b).

3. Bande selon la revendication 1 ou la revendication 2,
**caractérisée en ce que** lesdits trous dans lesdites extrémités de bande chevauchantes sont prévus avec des moyens de renfort des bords consistant en deux parties (7a, 7b), qui sont pressées l'une contre l'autre de sorte que la bande soit compressée localement près du trou.

4. Bande selon l'une quelconque des revendications 1 à 3,
**caractérisée en ce que** des saillies, des projections, des fraisures ou des bossages et/ou des aides équivalentes sont proposés dans une desdites plaques ou dans les deux (3 et/ou 6) sur la surface ou les surfaces de celles-ci se faisant face.

5. Bande selon l'une quelconque des revendications 1 à 4,
**caractérisé en ce que** le nombre de trous dans chaque bande est de trois.
